# DEMANDE DE BREVET EUROPEEN

(11) **EP 0 596 814 A1**
(43) Date de publication de la demande: **11.05.1994**
(21) Numéro de dépôt: 93420431.4
(22) Date de dépôt: 29.10.1993
(51) Int. Cl.: G01T 3/00, H01J 47/12

(54) **Dispositif de détection neutronique pour mesurer la puissance d'un réacteur nucléaire**

(30) Priorité: 04.11.1992 FR 9213356
(71) Demandeur: SCHNEIDER ELECTRIC SA, F-92100 Boulogne-Billancourt (FR)
(72) Inventeur: Burel, Jean-Pierre, F-38050 Grenoble Cédex 09 (FR)
(74) Mandataire: Hecke, Gérard

(57) **Abrégé**

La présente invention concerne un dispositif de détection neutronique pour mesurer la puissance d'un réacteur nucléaire.

Ce dispositif (10) se compose d'une enceinte étanche (11) à l'intérieur de laquelle est monté un détecteur (12) et contenant un gaz neutre. Le détecteur est formé d'une chambre du type à fission comprenant une électrode extérieure (13) de forme cylindrique, revêtue d'une couche d'uranium sous forme métallique, enrichi en isotope 235 et d'une électrode intérieure (15) de forme cylindrique coaxiale à l'électrode extérieure. L'enceinte étanche présente une forme annulaire et ménage un espace cylindrique central (18) ouvert à ses deux extrémités pour loger un modérateur (19) pour ralentir les neutrons rapides avec une grande efficacité vis à vis de la détection.

Cette réalisation a l'avantage de rendre le modérateur aisément remplaçable. Elle est favorable pour utiliser des électrodes cylindriques de grand diamètre augmentant ainsi la sensibilité.

## Description

L'invention concerne un dispositif de détection neutronique destiné à mesurer le débit de fluence neutronique à l'extérieur du coeur d'un réacteur nucléaire, ce dispositif comportant d'une part au moins un détecteur formé par une chambre d'ionisation du type à fission avec dépôt d'uranium ayant une électrode positive polarisée par une source de tension positive et délivrant un signal de sortie appliqué à un circuit électronique de mesure et une électrode négative connectée à la masse, ce détecteur étant logé dans une enceinte étanche contenant un gaz ou un mélange de gaz, et d'autre part au moins un élément modérateur pour ralentir les neutrons rapides.

Un dispositif de ce type est décrit notamment par la demande de brevet français publiée sous le N° 2.670.301 de la demanderesse. Dans ce dispositif l'élément modérateur est constitué d'un élément fait d'un matériau fortement hydrogéné tel que par exemple du polyéthylène à haute densité, placé à l'intérieur de l'enceinte.

Il se trouve que ce matériau se dégrade sous l'action des rayonnements, ce qui risque de modifier notablement les caractéristiques fonctionnelles.

L'objet de l'invention consiste à réaliser un dispositif de détection, dans lequel l'élément modérateur peut être aisément remplacé sans aucune intervention à l'intérieur de l'enceinte étanche contenant le détecteur proprement dit.

Selon une forme de réalisation préférentielle cette enceinte est ménagée autour d'un espace central ouvert dans lequel est disposé ledit élément modérateur. Cet espace peut avoir une forme cylindrique de section circulaire et ladite enceinte peut délimiter un volume cylindrique de section annulaire qui entoure complètement cet espace central ouvert. L'enceinte étanche est avantageusement délimitée par deux éléments plans annulaires disposés parallèlement qui constituent ses deux extrémités et par deux parois latérales cylindriques disposées coaxialement.

L'élément modérateur est de préférence constitué d'au moins un bloc cylindrique de section circulaire d'un matériau hydrogéné, cette section ayant un diamètre au plus égal à celui dudit espace central.

D'autres caractéristiques et les avantages qui en découlent ressortiront plus clairement de la description suivante d'un mode de réalisation préféré et de diverses variantes données à titre d'exemples non limitatifs et représentés par les dessins annexés dans lesquels :
la figure 1 représente une première forme de réalisation vue en coupe axiale du dispositif selon l'invention,
la figure 2 représente une autre forme de réalisation du dispositif selon l'invention vu en perspective et coupé selon un plan médian,
la figure 3 représente une vue partielle, en coupe axiale de la réalisation selon la figure 2.
la figure 4 représente une vue en coupe axiale d'une variante dans laquelle la chambre à fission de grande sensibilité est dédoublée.

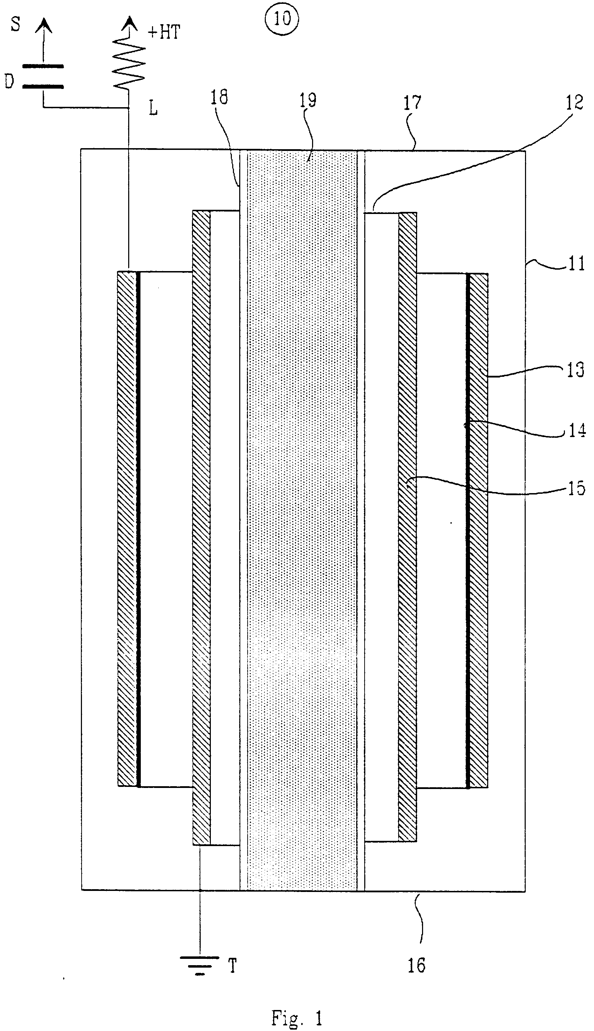

En référence à la figure 1, le dispositif de détection neutronique 10 se compose d'une enceinte étanche 11 à l'intérieur de laquelle est monté un détecteur 12 et contenant du gaz, par exemple un mélange d'argon et d'azote. Ce détecteur 12 est formé par une chambre du type à fission, comprenant une électrode extérieure 13 constituée d'un élément tubulaire de forme cylindrique, pourvue d'un revêtement intérieur 14 fait d'une couche d'uranium enrichi en isotope 235 sous forme métallique, et une électrode intérieure 15 également constituée d'un élément tubulaire, disposée coaxialement par rapport à ladite électrode extérieure. L'électrode extérieure est connectée à une source de haute tension positive + HT et l'électrode intérieure est reliée à la masse T. Un signal de sortie S sous forme d'impulsions ou de fluctuations du courant est recueilli sur une dérivation D du câble de liaison L de l'électrode extérieure à la source de haute tension + HT.

L'enceinte étanche 11 est délimitée par deux parois latérales respectivement extérieure et intérieure cylindriques disposées coaxialement et par deux éléments plans annulaires respectivement 16 et 17 soudés aux extrémités opposées de ces parois latérales. Ces composants sont de préférence réalisés en métal et sont scellés hermétiquement. L'espace cylindrique ouvert 18 délimité par la paroi latérale intérieure de cette enceinte est occupé par un bloc cylindrique d'un matériau fortement hydrogéné, tel que par exemple le polyéthylène à haute densité ou tout autre matériau équivalent, qui constitue un modérateur 19 dont le rôle consiste à ralentir les neutrons rapides. Le diamètre de ce bloc est inférieur ou égal au diamètre de l'espace cylindrique 18 et il est retenu par des moyens quelconques, griffes de retenue, brides etc., dans cet espace cylindrique 18 qui est ouvert à ses deux extrémités et qui ne comporte aucune communication avec l'enceinte étanche 11.

Il est connu d'utiliser des dispositifs de détection à deux niveaux de détection, comportant une chambre à fission de grande sensibilité et une chambre à fission de faible sensibilité.

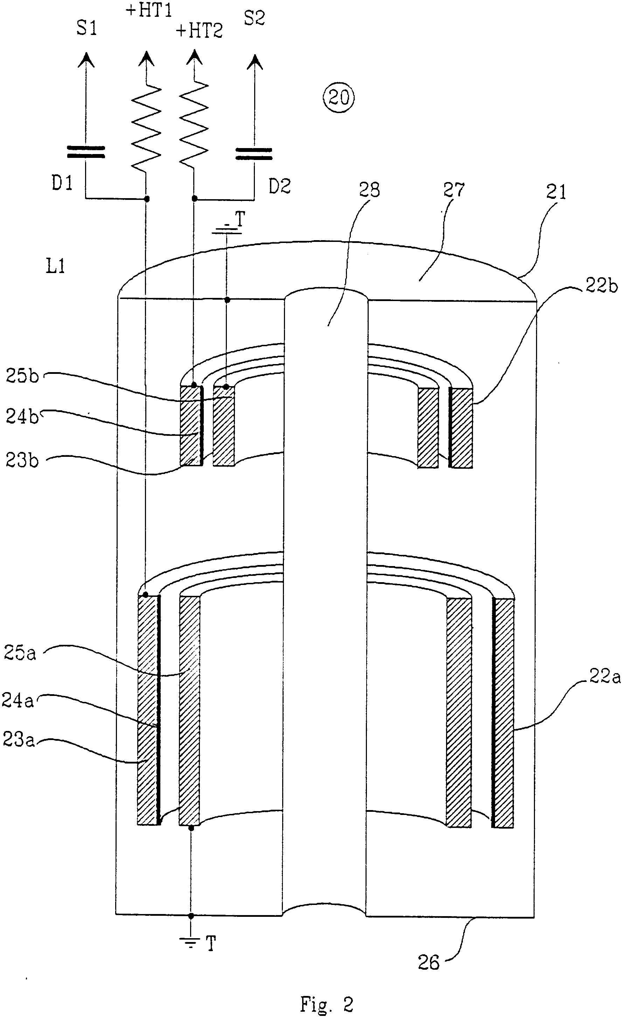

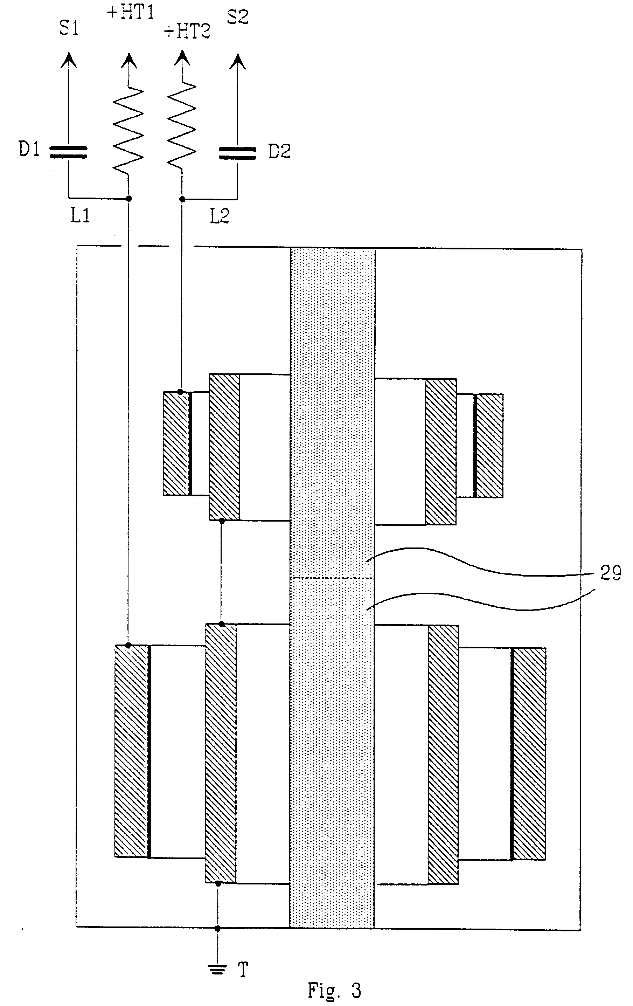

Les figures 2 et 3 représentent une forme de réalisation d'un dispositif de détection de ce type qui répond également aux objectifs de l'invention rappelés ci-dessus. Le dispositif de détection 20 comporte une enceinte étanche 21 à l'intérieur de laquelle sont montés un premier détecteur 22a et un second détecteur 22b. Le premier détecteur comporte une électrode extérieure 23a constituée d'un élément tubulaire de forme cylindrique revêtu sur sa face intérieure d'une couche 24a d'uranium fortement enrichi en isotope 235 sous forme métallique, et une électrode intérieure 25a également constituée d'un élément tubulaire de forme cylindrique, disposé coaxialement par rapport à l'électrode extérieure. Comme précédemment, l'électrode extérieure est reliée à une source de haute tension positive + HT₁ et l'électrode intérieure est connectée à la masse T. Un signal de sortie S₁ sous forme d'impulsions ou de fluctuations du courant est recueilli sur une dérivation D₁ du câble de liaison L₁ de l'électrode extérieure à la source + HT₁.

Le second détecteur 22b comporte une électrode extérieure 23b constituée d'un élément tubulaire de forme cylindrique, revêtu sur sa face intérieure d'une couche 24b d'uranium enrichi 235 et une électrode intérieure 25b également constituée d'un élément tubulaire de forme cylindrique disposé coaxialement par rapport à l'électrode extérieure. L'électrode extérieure est reliée à une source de haute tension positive + HT₂ et l'électrode intérieure est connectée à la masse T. Un signal de sortie S₂ sous forme d'impulsions ou de fluctuations de courant est recueilli sur une dérivation D₂ du câble de liaison L₂ de l'électrode extérieure à la source + HT₂.

Comme dans la réalisation décrite en référence à la figure 1, l'enceinte étanche est délimitée par deux parois latérales cylindriques coaxiales et est fermée à ses deux extrémités par deux éléments plans annulaires 26 et 27. L'espace cylindrique intérieur ouvert 28, délimité par la paroi latérale intérieure de l'enceinte de forme cylindrique à section circulaire est destiné à recevoir un ou plusieurs blocs cylindriques 29 (voir figure 3) d'un matériau fortement hydrogéné qui constitue un modérateur ralentisseur de neutrons rapides. Ce bloc pourrait bien entendu être réalisé d'une pièce ou en plusieurs éléments juxtaposés ou emboîtés. Dans ce cas la nature du matériau pourrait être différente pour chaque élément de manière à assurer la fonction "ralentisseur de neutrons rapides" avec la meilleure efficacité. Dans cet ordre d'idées on pourrait envisager une construction en sandwich ou une réalisation en éléments coaxiaux emboîtés ayant des densités différentes.

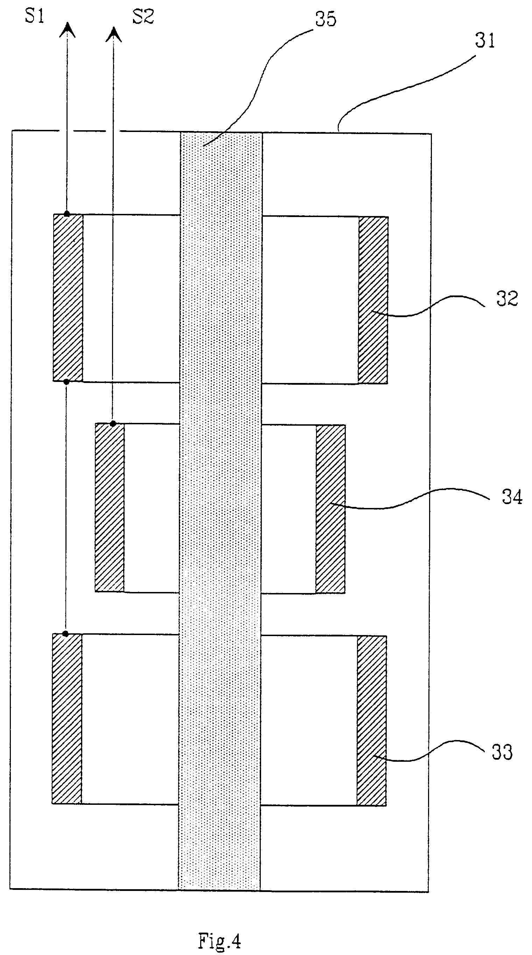

La figure 4 représente une vue schématique d'une variante selon laquelle la chambre à fission de grande sensibilité est dédoublée. Le dispositif comporte à nouveau une enceinte étanche 31 similaire à celles des réalisations décrites ci-dessus qui contient dans ce cas un premier détecteur 32 électriquement couplé à un deuxième détecteur 33 identique au précédent. Ces deux détecteurs sont disposés de part et d'autre d'un troisième détecteur 34. Tous ces détecteurs comportent des électrodes annulaires coaxiales, qui sont réalisées de manière similaire à celle décrite en référence aux constructions illustrées par les figures 1 à 3. L'enceinte étanche 31 définit dans sa partie centrale un espace cylindrique 35 ouvert à ses deux extrémités, qui est destiné à contenir un matériau ralentisseur de neutrons rapides, sous la forme d'un ou plusieurs blocs d'un matériau approprié tel que par exemple du polyéthylène à haute densité.

Les deux détecteurs 32 et 33, couplés, en série, délivrent un premier signal S₁ et le détecteur 34 délivre un signal S₂. La représentation des connexions est schématique. Dans la pratique ces signaux sont recueillis comme précédemment sur une dérivation du câble de liaison à une source de haute tension positive.

Ce principe de "dédoublement" pourrait être appliqué à l'ensemble des détecteurs et il serait envisageable de prévoir dans une même enceinte étanche un nombre quelconque de détecteurs de grande sensibilité et de détecteurs de sensibilité plus faible.

Dans toutes ces constructions, les éléments ralentisseurs de neutrons rapides sont stockés en dehors de l'enceinte étanche et peuvent de ce fait être remplacés sans qu'il soit nécessaire d'accéder à l'intérieur de cette chambre.

## Revendications

1. Dispositif de détection neutronique (10, 20) destiné à mesurer le débit de fluence neutronique à l'extérieur du coeur d'un réacteur nucléaire, ce dispositif comportant d'une part au moins un détecteur, formé par une chambre d'ionisation du type à fission avec dépôt d'uranium ayant une électrode positive polarisée par une source de tension positive et délivrant un signal de sortie appliqué à un circuit électronique de mesure et une électrode négative connectée à la masse, ce détecteur étant logé dans une enceinte (11, 21, 31) étanche contenant un gaz ou un mélange de gaz, et d'autre part au moins un élément modérateur (19, 29) pour ralentir les neutrons rapides, caractérisé en ce que l'élément modérateur (19, 29) est facilement remplaçable en étant disposé en dehors de ladite enceinte étanche dans laquelle est logé le détecteur (12, 22a, 22b, 32, 33, 34).

2. Dispositif selon la revendication 1, caractérisé en ce que ladite enceinte (11, 21, 31) est ménagée autour d'un espace (28, 35) central ouvert dans lequel est disposé ledit élément modérateur.

3. Dispositif selon la revendication 2, caractérisé en ce que ledit espace (28, 35) central ouvert a une forme cylindrique de section circulaire et ladite enceinte étanche délimite un volume cylindrique annulaire qui entoure complètement cet espace central ouvert, ce volume cylindrique annulaire étant compris entre deux parois latérales cylindriques coaxiales et deux éléments d'extrémités annulaires plans (16, 17 ; 26, 27).

4. Dispositif selon la revendication 3, caractérisé en ce que l'élément modérateur (19, 29) est constitué d'au moins un bloc cylindrique de section circulaire d'un matériau hydrogéné, cette section ayant un diamètre au plus égal à celui dudit espace central ouvert.

5. Dispositif selon la revendication 2, caractérisé en ce que ladite électrode positive et ladite électrode négative sont constituées d'éléments tubulaires de forme cylindrique disposés coaxialement dans l'enceinte étanche (19, 29) en entourant l'élément modérateur (19, 29) logé dans l'espace central ouvert.

6. Dispositif selon la revendication 2, dans lequel le détecteur est dédoublé et comprend un premier détecteur (22a) qui définit une chambre à fission de grande sensibilité et un second détecteur (22b) qui définit une chambre à fission de faible sensibilité, ces deux détecteurs étant décalés axialement dans l'enceinte étanche, caractérisé en ce que chaque détecteur (22a, 22b) comporte une électrode constituée d'un élément tubulaire extérieur (23a, 23b) de forme cylindrique et une électrode constituée d'un élément tubulaire intérieur (25a, 25b) de forme cylindrique, ces électrodes étant coaxiales et entourant l'élément modérateur logé dans l'espace (28) central ouvert.

7. Dispositif selon la revendication 6, caractérisé en ce que la chambre à fission de grande sensibilité comporte au moins deux détecteurs (32, 33) connectés en série.

8. Dispositif selon la revendication 7, caractérisé en ce que les deux détecteurs (32, 33) de la chambre à fission de grande sensibilité sont disposés de part et d'autre du détecteur (34) de la chambre à fission de faible sensibilité.

9. Dispositif selon la revendication 6, caractérisé en ce que la chambre à fission de faible sensibilité comporte au moins deux détecteurs connectés en série.

10. Dispositif selon la revendication 1 caractérisé en ce que l'uranium est déposé sous forme métallique.
